# EUROPÄISCHE PATENTSCHRIFT

(11) **EP 1 512 145 B1**
(45) Veröffentlichungstag und Bekanntmachung des Hinweises auf die Patenterteilung: **27.09.2006**
(21) Anmeldenummer: 03757027.2
(22) Anmeldetag: 05.06.2003
(51) Int. Cl.: G11B 7/09

(54) **VERFAHREN ZUM OPTIMIERTEN SPURFÜHREN**
OPTIMIZED TRACKING METHOD
PROCEDE PERMETTANT D'OPTIMISER LE GUIDAGE LE LONG D'UNE PISTE

(30) Priorität: 07.06.2002 DE 10225271
(43) Veröffentlichungstag der Anmeldung: 09.03.2005
(73) Patentinhaber: Thomson Licensing, 92100 Boulogne-Billancourt (FR)
(72) Erfinder: DIETRICH, Christoph, 69126 Heidelberg (DE); BÜCHLER, Christian, 78052 Villingen-Schwenningen (DE)
(74) Vertreter: Thies, Stephan
(86) Internationale Anmeldenummer: PCT/EP2003/005902
(87) Internationale Veröffentlichungsnummer: WO 2003/105142

(56) Entgegenhaltungen:
- US-A1- 2001 009 535
- US-B1- 6 314 066
- PATENT ABSTRACTS OF JAPAN vol. 1998, no. 01, 30. Januar 1998 (1998-01-30) & JP 09 231588 A (RICOH CO LTD), 5. September 1997 (1997-09-05)
- PATENT ABSTRACTS OF JAPAN vol. 1997, no. 10, 31. Oktober 1997 (1997-10-31) & JP 09 167359 A (HITACHI LTD), 24. Juni 1997 (1997-06-24)
- PATENT ABSTRACTS OF JAPAN vol. 1998, no. 04, 31. März 1998 (1998-03-31) & JP 09 320065 A (NIKON CORP), 12. Dezember 1997 (1997-12-12)

## Beschreibung

Die Erfindung betrifft das Einstellen des Spurfehler-Offsets beim Lesen und Schreiben von optischen Aufzeichnungsträgern, oft auch als optische Platten bezeichnet, im DVD-RAM-Format oder einem ähnliche Eigenschaften aufweisenden Format.

Die Erfindung beschreibt ein Kriterium nach dem der Spurfehler-Offset mit dem Zweck eingestellt werden kann, den optischen Abtaster möglichst exakt auf der Mitte der vorgeprägten Spuren (Land/Groove) zu halten.

Gemeinhin werden die Verfahren "Push-Pull" bzw. "Differential-Push-Pull" zur Spurfehlersignalerzeugung von wiederbeschreibbaren Medien genutzt. Diese Methoden erzeugen normalerweise ein zur Spurmitte symmetrisches sinusförmiges Fehlersignal, das durch elektrische und optische Einflüsse mit einem Offset behaftet sein kann. Da dieses Signal meist symmetrisch zur Spurmitte ist, können diese Offsets durch elektrisches Symmetrisieren der oberen und unteren Einhüllenden um Null so kompensiert werden, daß der Abtaster bei geschlossener Spurregelung exakt auf Spurmitte gehalten wird. Dies trifft jedoch nicht mehr zu, wenn das Spurfehlersignal aufgrund einer unsymmetrischen Lichtverteilung im auslesenden Lichtfleck, auch Spot genannt, unsymmetrisch zur Spurmitte wird. Dies kann beispielsweise leicht dann auftreten, wenn der Laserchip im Gehäuse im Rahmen der notwendigen Toleranzen gekippt ist. Da man im Fall von wiederbeschreibbaren Platten auf eine hohe Effizienz des optischen Systems angewiesen ist, müssen vergleichsweise kurzbrennweitige Kollimatoren eingesetzt werden. Dies führt dazu, daß solche Abweichungen von der optischen Achse zu größeren Unsymmetrien im Strahlprofil führen, als bei langbrennweitigen Leseabtastern. Dann bieten die altbekannten Lösungen keine Möglichkeit den Spurfehler-Offset richtig zu kompensieren.

US 2001/0009535 das den Einleitenden Teil der unabhängigen Ansprüche reflektiert, sowie JP 09 231 588, US 6 314 066, JP09167359 oder JP 09 320 065 beschreiben den Stand der Technick in Bezug auf Spurführung bei Übergänge von grundlegenden Eigenschaftsänderungen der Spur (Land/Groove).

Es ist eine Aufgabe der Erfindung, ein Verfahren zum optimierten Spurführen anzugeben, sowie ein entsprechendes Gerät. Das erfindungsgemäße Verfahren zum optimierten Spurführen eines optischen Abtasters entlang einer Spur eines optischen Aufzeichnungsträgers, welche Spur in dichter Abfolge angeordnete Informationsmarkierungen aufweist sowie grundlegende Eigenschaftsänderung in wesentlich geringerer Dichte, besteht darin, daß ein Spurfehlersignal gebildet wird, beispielsweise gemäß der bekannten Spurführungsmethode Push-Pull-Methode oder Dreistrahlmethode, daß das Auftreten von grundlegenden Eigenschaftsänderungen der Spur detektiert wird, daß aus dem Vergleich des Werts des Spurfehlersignals vor und nach dem Auftreten der grundlegenden Eigenschaftsänderung ein Offset-Wert gebildet und dieser dem Spurfehlersignal zur Bildung eines optimierten Spurfehlersignals überlagert wird. Die genannten Schritte werden entweder endlos, d. h. während des gesamten Abtastvorgangs, wiederholt, was den Vorteil einer dauernden Anpassung an gegebenenfalls im Betrieb sich ändernde Offset-Werte hat. Vorteilhaft ist es ebenfalls, die Schritte nur so lange zu wiederholen, bis ein bestimmter vorgegebener Wert unterschritten wird. Dies hat den Vorteil, Arbeitsschritte einzusparen, und ist ausreichend, wenn keine oder nur geringe Änderungen des Offset-Werts im Betrieb auftreten. Vorteilhafterweise werden die Verfahrensschritte von Zeit zu Zeit wiederholt, zum Beispiel alle zwei Minuten oder alle 300 Umdrehungen des optischen Aufzeichnungsträgers. Ebenfalls im Rahmen der Erfindung liegend ist es, die Schritte nur einmal für eine vordefinierte Anzahl Wiederholungen auszuführen, ohne das Unterschreiten eines Mindestwerts oder eines anderen Kriteriums zu berücksichtigen. Die in dichter Abfolge auf der Spur angeordneten Informationsmarkierungen werden oft auch als Pits bezeichnet und stellen Erhöhungen oder Vertiefungen bezüglich der Spur, hellere oder dunklere Stellen bezüglich der Spur, in bestimmte Richtung magnetisierte Bereiche der Spur oder ähnliche bekannte Markierungen dar. Grundlegende Eigenschaftsänderungen der Spur, die in wesentlich geringerer Dichte als die Informationsmarkierungen auftreten, sind beispielsweise der Übergang einer als Erhöhung ausgebildeter Spur in eine als Vertiefung ausgebildete Spur, der sogenannte Groove/Land-Übergang, der Übergang einer hellen in eine dunkle Spur, der Übergang einer magnetisch vorgeprägten in eine magnetisch nicht vorgeprägte oder anders vorgeprägte Spur oder ähnliche, detektierbare Übergänge. Erfindungsgemäß wird ein derartiger Übergang detektiert und aus dem Vergleich des Spurfehlersignals vor und nach dem Übergang ein Offset-Wert für das Spurfehlersignal generiert. Bei offenem Spurregelkreis sind dabei die vor und nach der Eigenschaftsänderung anliegenden Werte des Spurfehlersignals zu vergleichen, beispielsweise durch Differenzbildung. Bei geschlossenem Regelkreis reicht es aus, den kurzzeitig nach der Eigenschaftsänderung auftretenden Spitzenwert des Spurfehlersignals heranzuziehen, oder einen im vorbestimmten zeitlichen Abstand nach der Eigenschaftsänderung anliegenden Spurfehlerwert. Im einfachsten Fall wird der gebildete Offset-Wert dem Spurfehlersignal des Spurregelkreises additiv zugeführt.

Vorteilhafterweise erfolgt das Detektieren des Auftretens von grundlegenden Eigenschaftsänderungen der Spur durch Detektieren eines Header-Bereichs. Dabei wird sich zunutze gemacht, daß eine grundlegende Eigenschaftsänderung bei vielen Arten optischer Aufzeichnungsträger mit der Anordnung eines Header-Bereichs, oft auch Prepit-Bereich genannt, einhergeht. Derartige Header-Bereiche sind besonders einfach zu erkennen, eine entsprechende Detektionsfunktion ist vielfach ohnehin in einem entsprechenden Gerät vorgesehen, sodaß auf eine entsprechende separate Detektionseinheit verzichtet werden kann. Der Aufwand für das Gerät reduziert sich somit.

Erfindungsgemäß ist vorgesehen, daß das Spurfehlersignal mittels einer der Spurführungsmethoden Push-Pull-Methode, Dreistrahlmethode und Differential-Push-Pull-Methode gebildet wird, auch wenn zur tatsächlichen Spurführung im Spurregelkreis eine andere Methode Verwendung findet. Das Spurfehlersignal der genannten Spurführungsmethoden eignet sich besonders gut zur Offset-Bestimmung. Bei der Differential-Push-Pull-Methode wird vorzugsweise das Signal des äußeren oder eines der äußeren Abtaststrahlen verwendet.

Alternativ dazu wird erfindungsgemäß ein anderes, vom Spur-Offset des Abtasters beeinträchtigtes Signal zur Bildung des Offset-Werts genutzt. Beispielsweise eignet sich dafür das hochfrequente Push-Pull-Signal, welches auch von den Informationsmarkierungen der Spur beeinflußt ist, aber beim Auftreten einer grundlegenden Eigenschaftsänderung der Spur auch eine detektierbare Änderung erfährt. Auch andere geeignete Signale sind hierbei vorteilhaft verwendbar. Die Verwendung eines anderen Signals statt des Spurfehlersignals zur Detektion des Spurfehler-Offsets hat den Vorteil, daß dieses von Störeinflüssen frei ist und somit eine weiter optimierte Bildung des Offset-Werts ermöglicht.

Ein erfindungsgemäßes Gerät weist einen Spurregelkreis, einen Spureigenschaftsänderungsdetektor und einen Offset-Wert-Detektor auf, welcher in Abhängigkeit von einem vom Spureigenschaftsänderungsdetektor abgegebenen Signal aus einem Spurfehlersignal des Spurregelkreises einen Offset-Wert generiert und diesen dem Spurregelkreis zuführt.

Mit der Erfindung wird eine optimierte Einstellung des korrekten Spurfehler-Offsets auch bei einer unsymmetrischen Lichtverteilung im Brennfleck auf der Disk, dem optischen Aufzeichnungsträger, erreicht. Darüberhinaus können alle Spurfehler-Offsets, auch die, die auf andere elektrische und optische Ursachen zurückzuführen sind, korrekt kompensiert werden.

Die Erfindung wird im folgenden anhand eines bevorzugten Ausführungsbeispiels dargestellt. Dabei zeigen:
- Fig. 1: Groove/Land-ZTbergang bei einem optischen Aufzeichnungsträger sowie zugehörige Signalbilder,
- Fig. 2: schematische Darstellung eines erfindungsgemäßen Geräts.

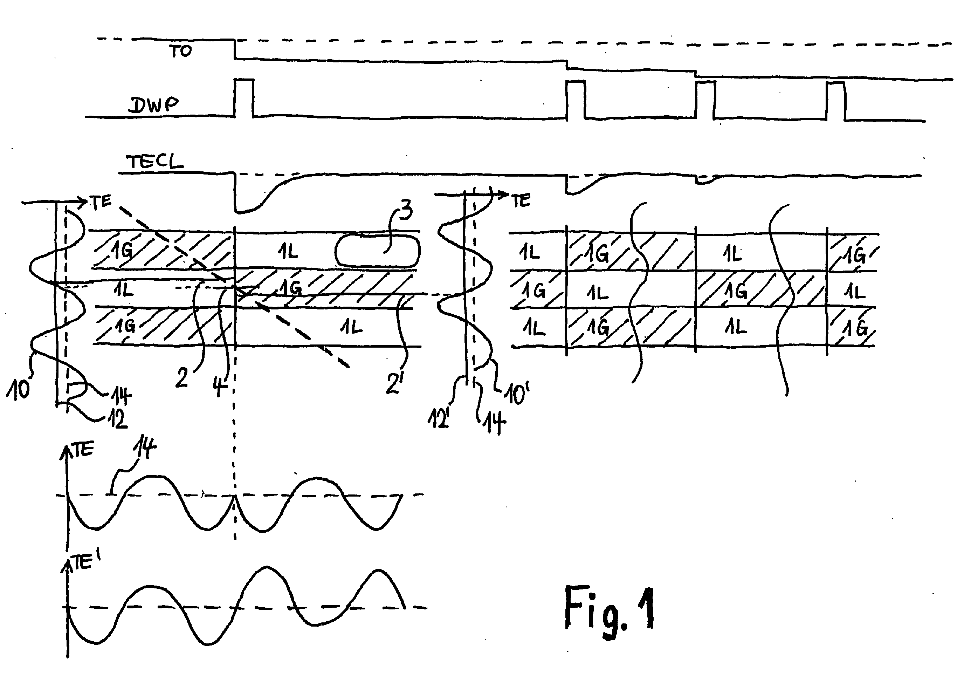

Die Fig. 1 zeigt im mittleren Bereich beispielhaft drei nebeneinanderliegende Spuren eines optischen Aufzeichnungsträgers mit unterschiedlichen Eigenschaften, wie sie beispielsweise bei einer DVD-RAM auftreten. Dabei sind die bei einer DVD-RAM vorhandenen Prepit- oder Header-Bereiche der Einfachheit halber hier nicht dargestellt. Eine als Vertiefung ausgebildete Spur 1G ist schraffiert dargestellt, während eine als Erhöhung ausgebildete Spur 1L ohne Schraffur dargestellt ist. Im linken Bereich ist die durch Offset hervorgerufene, von der Spurregelung eingestellte, mit Offset behaftete Spurmitte 2, 2' dargestellt, im rechten Bereich sind die Spuren 1L, 1G in übertrieben dichtem Abstand dargestellt. Eine Informationsmarkierung 3 ist beispielhaft dargestellt, zur Vereinfachung der Abbildung ist auf die Darstellung weiterer Informationsmarkierungen verzichtet worden. Links und rechts des mittleren linken Bereichs der Fig. 1 ist quer zur Spur das der entsprechenden Abweichung von der Spurmitte 4 entsprechende Spurfehlersignal TE eingezeichnet. Man erkennt, daß es symmetrisch um einen Wert 12, der dem Offset 2 entspricht, verläuft, während es verschoben zu einer der Spurmitte 4 entsprechenden Linie 14 ist. Entsprechendes gilt für die im mittleren Bereich dargestellte Spurfehlersignalkurve 10', bei der der Mittelwert 12' in die andere Richtung bezüglich der Linie 14 verschoben ist.

Gestrichelt dargestellt ist ein diagonales Überqueren des Abtaststrahls über die Spuren 1L, 1G. Im unteren Bereich der Figur 1 ist das entsprechende Spurfehlersignal TE des offenen Spurregelkreises angegeben, wie es ohne Berücksichtigung der Änderung der Polarität beim Übergang von Land-Spur 1L auf Groove-Spur 1G auftritt, sowie das Spurfehlersignal TE', bei dem die entsprechende Polaritätsumschaltung berücksichtigt ist. Diese erfolgt durch Invertierung des Signals TE im Anschluß an den Übergang von Spur 1G zu Spur 1L beziehungsweise umgekehrt. Deutlich sichtbar ist, daß die der Spurmitte entsprechende Linie 14 nicht dem arithmetischen Mittelwert des Spurfehlersignals TE, TE' entspricht. Dies hat zur Folge, daß wenn zur Einstellung des Spurfehler-Offsets das arithmetische Mittel entsprechend Linie 12,12' verwendet wird, nicht der Spurmitte 4 gefolgt wird, sondern versetzt dazu der Linie 2, 2' gefolgt wird. Im oberen Bereich der Figur 1 ist das Spurfehlersignal TECL bei geschlossenem Spurregelkreis dargestellt. Der Spurregelkreis hat die Eigenschaft, das Spurfehlersignal TECL auf den Wert 0 zu bringen. Lediglich am Wechsel von Groove-Spur 1G zu Land-Spur 1L oder von Land-Spur 1L zu Groove-Spur 1G tritt ein Sprung im Signal TECL auf. Dieser Sprung des Signals TECL wird mithilfe eines Detektion-Window-Pulse DWP erfaßt und beispielsweise mittels eines Integrators zur Korrektur des Spur-Offsetwerts verwendet. Ein entsprechender Spur-Offsetwert TO ist ganz oben in Fig. 1 dargestellt. Er fängt auf der linken Seite bei 0 an und wird mit jedem Puls im Signal DWP und dem entsprechend zugehörendem Sprung im Signal TECL abgeändert.

Eine der spezifischen Eigenschaften des DVD-RAM Standards ist die Nutzung sowohl von Groove-Spur 1G, als auch von Land-Spur 1L zur Datenaufzeichnung. Um nicht zwei unabhängige Datenspiralen zu haben, gibt es auf dem optischen Aufzeichnungsträger, im folgenden Disk genannt, pro Umdrehung und Spur eine Stelle, an der eine Groove-Spur 1G in eine Land-Spur 1L und umgekehrt übergeht. Beim kontinuierlichen Auslesen oder Beschreiben der Disk über einen solchen Übergang hinweg, muß an diesem Übergang die Polarität der Spurregelung umgeschaltet werden. Ist nun aus beliebigem Grund der Offset TO des Spurfehlersignals TE nicht so eingestellt, daß der abtastenden Lichtfleck symmetrisch zur Spurmitte gehalten wird, hat eine Umschaltung der Polarität beim Übergang zur Folge, daß der Lichtfleck um den doppelten Betrag des Spurfehlers TE auf die andere Seite der Spurmitte 4 gezogen wird. Dies ist mit einem deutlichen Ausschlag auf dem Spurfehlersignal TECL gekoppelt. Das Auftreten dieses Ausschlages beim Land-Groove- bzw. beim Groove-Land-Übergang wird als Kriterium zur Einstellung des optimalen Spurfehlersignal-Offsets TO genutzt. Da gemäß dem DVD-RAM Format dieser Übergang anhand der hier nicht dargestellten Header-Prepits detektiert werden kann und dies zum richtigen Umschalten der Spurreglerpolarität ohnehin gemacht wird, ist es für einen digitalen DSP-basierten Regler möglich, den Wert des Spurfehlersignals der kurz nach dem Land-Groove auftritt bzw. beim Groove-Land-Übergang mit demjenigen, der kurz davor auftritt zu vergleichen und das Verschwinden der Differenz als Kriterium zur optimalen Einstellung des Spurfehler-Offsets TO zu nutzen.

Ein entscheidender Vorteil der Erfindung liegt in der Universalität des beschriebenen Kriteriums. Unabhängig von der Ursache möglicher oder notwendiger Spurfehler-Offsets TO kann das Kriterium angewendet werden, um den optimalen Wert des Offsets TO einzustellen und damit den optischen Abtaster auf der Spurmitte 4 zu halten. Dies ist vor allem im Zusammenhang mit der Push-Pull-Methode zur Generierung des Spurfehlersignals TE von Bedeutung, da diese Methode einen sehr stark von der Justage der Optik abhängigen Offset aufweist. So können sich schon leichte temperaturbedingte Verschiebungen im optischen Aufbau extrem auf das Spurfehlersignal auswirken. Unabhängig davon läßt sich das oben beschriebene Kriterium anwenden.

Eine Variante der Erfindung besteht darin, andere Signale als das niederfrequente Push-Pull-Singnal zur Auswertung des Kriteriums zu nutzen. Vorteilhaft ist hier insbesondere das hochfrequente Push-Pull-Signal, das als Read Channel 2 im System vorliegt. Auch das äußere Push-Pull-Signal, das im Fall der Differential-Push-Pull-Methode ausgewertet wird, kann für die Auswertung genutzt werden. Jegliches Signal, welches die radiale Detektorposition angibt, kann entsprechend ausgewertet werden.

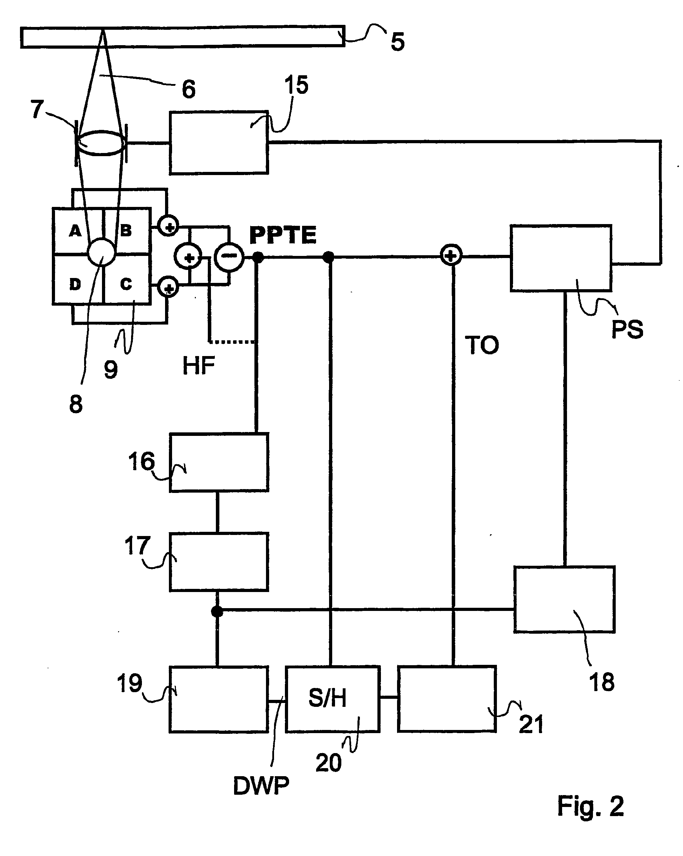

Fig. 2 zeigt ein erfindungsgemäßes Gerät in schematischer Darstellung. Ein optischer Aufzeichnungsträger 5 wird mittels eines Lichtstrahls 6 abgetastet, welcher mittels einer Fokuslinse 7 als Lichtfleck 8 auf einen Photodetektor 9 gelenkt wird. Der Photodetektor 9 weist vier Quadranten A, B, C, D auf, deren Ausgangssignale mittels Addierer und Subtrahierer zu einem Spurfehlersignal PPTE beziehungsweise einem Datensignal HF kombiniert werden. Das Spurfehlersignal PPTE wird in einem weiteren Addierer mit einem Offset TO beaufschlagt und einem Polaritätsumschalter PS zugeführt. Dessen Ausgangssignal ist das Eingangssignal eines Spurreglers 15, der in bekannter Weise die Objektivlinse 7 zur Spurregelung beaufschlagt.

Das Gerät weist weiterhin einen den Spureigenschaftsänderungsdetektor 16, 17 auf. Dieser besteht aus einem Header-Bereich-Detektor 16, der das Auftreten von bei DVD-RAM Disks vorhandenen Header-Bereichen detektiert und einem Spurtypdetektor 17, der die Art des Übergangs Land-Spur 1L auf Groove-Spur 1G oder Groove-Spur 1G auf Land-Spur 1L detektiert und ein entsprechendes Signal an eine Steuereinheit 18 abgibt. Diese löst das Umschalten des Polaritätsumschalters PS aus. Weiterhin löst das vom Spurtypdetektor 17 abgegebene Signal eine Zeitschaltung 19 aus, welche nach vorgegebenen Kriterien zeitlich versetzt einen Puls DWP an ein Sample and Hold-Glied 20 abgibt, welches den aktuellen Wert des Spurfehlersignals PPTE, welcher dem Peak im Signal TECL der Fig. 1 entspricht, speichert. Dieser Wert wird einer Offset-Generator Stufe 21 zugeführt, die beispielsweise als Verstärker oder als Integrator ausgebildet ist. Sie gibt den Offset-Wert TO ab.

Dem Header-Bereich-Detektor 16 kann alternativ zum Spurfehlersignal PPTE auch das Datensignal HF zugeführt werden. Auch aus diesem Signal ist eine Erkennung des Header-Bereichs sinnvoll möglich. Dies ist strichpunktiert angedeutet. Es versteht sich, daß das beschriebene Ausführungsbeispiel anhand einer DVD-RAM nur eine der möglichen vorteilhaften Anwendungen der vorliegenden Erfindung darstellt.

## Patentansprüche

1. Verfahren zum optimierten Spurführen eines optischen Abtasters entlang einer Spur (1L, 1G) eines optischen Aufzeichnungsträgers, wobei die Spur (1L, 1G) in dichter Abfolge angeordnete Informationsmarkierungen (3) aufweist, sowie in wesentlich geringerer Dichte grundlegende Eigenschaftsänderungen (1L/1G, 1G/1L) aufweist, in dem folgende Schritte durchgeführt werden:
- Bilden eines Spurfehlersignals (TE, TECL, PPTE)
- Detektieren des Auftretens von grundlegenden Eigenschaftsänderungen der Spur (1L, 1G) **gekennzeichnet durch**,
- Bilden eines Offset-Werts (TO) aus dem Vergleich des Werts des Spurfehlersignals (TE, TECL, PPTE), der kurz vor und der kurz nach der grundlegenden Eigenschaftsänderung auftritt
- Bilden des Spurfehlersignals (TE, TECL, PPTE) unter Berücksichtigung des Offset-Werts (TO) und
- Wiederholen der genannten Schritte.

2. Verfahren gemäß Anspruch 1, **dadurch gekennzeichnet, daß** das Detektieren des Auftretens von grundlegenden Eigenschaftsänderungen der Spur (1L, 1G) durch Detektieren eines Header-Bereichs erfolgt.

3. Verfahren gemäß Anspruch 1, **dadurch gekennzeichnet, daß** das Spurfehlersignal (TE, TECL, PPTE) mittels einer der Spurführungsmethoden Push-Pull-Methode, Dreistrahl-Methode und Differential-Push-Pull-Methode gebildet wird.

4. Verfahren gemäß Anspruch 1, **dadurch gekennzeichnet, daß** statt des Spurfehlersignals (TE, TECL, PPTE) ein anderes, vom Spur-Offset (12) des Abtasters beeinträchtigtes Signal gebildet wird.

5. Gerät zum Lesen und/oder Beschreiben optischer Aufzeichnungsträger, welche Spuren (1G, 1L) mit in dichter Abfolge angeordneten Informationsmarkierungen (3) aufweisen, und in wesentlich geringerer Dichte auftretende grundlegende Eigenschaftsänderungen, wobei das Gerät einen Spurregelkreis (9, PS, 15, 7) und einen Spureigenschaftsänderungsdetektor (16, 17) aufweist, **dadurch gekennzeichnet, daß** es einen Offset-Wert-Detektor (19, 20, 21) aufweist, der in Abhängigkeit von einem vom Spureigenschaftsänderungsdetektor (16, 17) abgegebenen Signal aus einem Spurfehlersignal (PPTE) des Spurregelkreises einen Offset-Wert (TO) generiert aus dem Vergleich des Werts des Spurfehlersignals (TE, TECL, PPTE), der kurz vor und kurz nach der grundlegenden Eigenshaftsänderung auftritt, und diesen Offset - Wert dem Spurregelkreis zuführt.

## Claims

1. Method for optimized tracking of an optical scanner along a track (1L, 1G) of an optical recording medium, the track (1L, 1G) having information markings (3) arranged in dense succession, and also having fundamental changes in properties (1L/1G, 1G/1L) in significantly lower density, in which following steps are carried out:
- formation of a track error signal (TE, TECL, PPTE)
- detection of the occurrence of fundamental changes in properties of the track (1L, 1G)
**characterized by**
- formation of an offset value (TO) from the comparison of the value of the track error signal (TE, TECL, PPTE) that occurs shortly before and shortly after the fundamental change in properties
- formation of the track error signal (TE, TECL, PPTE), taking account of the offset value (TO) and
- repetition of the aforementioned steps.

2. Method according to Claim 1, **characterized in that** the detection of the occurrence of fundamental changes in properties of the track (1L, 1G) is effected by detection of a header area.

3. Method according to Claim 1, **characterized in that** the track error signal (TE, TECL, PPTE) is formed by means of one of the tracking methods: push-pull method, three-beam method and differential push-pull method.

4. Method according to Claim 1, **characterized in that** a different signal that is impaired by the track offset (12) of the scanner is formed instead of the track error signal (TE, TECL, PPTE).

5. Apparatus for reading from and/or writing to optical recording media having tracks (1G, 1L) having information markings (3) arranged in dense succession, and fundamental changes in properties that occur in significantly lower density, the apparatus having a track control loop (9, PS, 15, 7) and a track property change detector (16, 17) **characterized in that** it has an offset value detector (19, 20, 21), which, in a manner dependent on a signal output by the track property change detector (16, 17), generates an offset value (TO) from a track error signal (PPTE) of the track control loop, from the comparison of the value of the track error signal (TE, TECL, PPTE) that occurs shortly before and shortly after the fundamental change in properties, and feeds said offset value to the track control loop.

## Revendications

1. Procédé permettant d'optimiser le guidage d'un dispositif de balayage optique le long d'une piste (1L, 1G) d'un support d'enregistrement optique, la piste (1L, 1G) présentant des repères d'informations dans une séquence dense (3) ainsi que des modifications importantes des propriétés dans une séquence substantiellement moins dense (1L/1G, 1G/1L), dans lequel les étapes suivantes sont exécutées :
- formation d'un signal d'erreur de piste (TE, TECL, PPTE)
- détection de l'apparition de modifications des propriétés de la piste (1L, 1G)
**caractérisé par**
- la formation d'une valeur de décalage (TO) à partir de la comparaison de la valeur du signal d'erreur de piste (TE, TECL, PPTE) qui apparaît immédiatement avant et après la modification importante des propriétés
- la formation du signal d'erreur de piste (TE, TECL, PPTE) compte tenu de la valeur de décalage (TO) et
- la répétition des étapes mentionnées.

2. Procédé selon la revendication 1, **caractérisé en ce que** la détection de l'apparition de modifications importantes des propriétés de la piste (1L, 1G) s'effectue par la détection d'une zone d'en-téte.

3. Procédé selon la revendication 1, **caractérisé en ce que** le signal d'erreur de piste (TE, TECL, PPTE) est formé à l'aide de l'un des procédés de guidage le long d'une piste, le procédé Push-Pull, le procédé à triple faisceau et le procédé Push-Pull différentiel,

4. Procédé selon la revendication 1, **caractérisé en ce qu'**un autre signal altéré par le décalage de piste (12) du dispositif de balayage est formé en lieu et place du signal d'erreur de piste (TE, TECL, PPTE),

5. Appareil de lecture et/ou d'écriture de supports d'enregistrement optiques présentant des pistes (1G, 1L) avec des repères d'informations (3) placés à des intervalles étroits, et des modifications importantes des propriétés apparaissant à des intervalles beaucoup plus étroits, l'appareil présentant une boucle d'asservissement de piste (9, PS, 15, 7) et un détecteur de modifications des propriétés de la piste (16, 17), **caractérisé en ce qu'**il présente un détecteur de valeur de décalage (19, 20, 21) qui génère, à partir de la comparaison de la valeur du signal d'erreur de piste (TE, TECL, PPTE) qui apparaît immédiatement avant et après la modification importante des propriétés, une valeur de décalage (TO) en fonction d'un signal émis par le détecteur de modifications des propriétés de la piste (16, 17) à partir d'un signal d'erreur de piste (PPTE) de la boucle d'asservissement de piste, et achemine cette valeur de décalage à la boucle d'asservissement de piste.
